# EUROPÄISCHE PATENTSCHRIFT

(11) **EP 1 165 942 B1**
(45) Veröffentlichungstag und Bekanntmachung des Hinweises auf die Patenterteilung: **10.12.2003**
(21) Anmeldenummer: 00912615.2
(22) Anmeldetag: 16.03.2000
(51) Int. Cl.: F01D 25/12, F02C 7/18

(54) **STRÖMUNGSMASCHINE MIT EINER KÜHLBAREN ANORDNUNG VON WANDELEMENTEN UND VERFAHREN ZUR KÜHLUNG EINER ANORDNUNG VON WANDELEMENTEN**
TURBO-ENGINE WITH AN ARRAY OF WALL ELEMENTS THAT CAN BE COOLED AND METHOD FOR COOLING AN ARRAY OF WALL ELEMENTS
TURBOMACHINE AVEC UN SYSTEME D'ELEMENTS DE PAROI POUVANT ETRE REFROIDI ET PROCEDE DE REFROIDISSEMENT D'UN SYSTEME D'ELEMENTS DE PAROI

(30) Priorität: 30.03.1999 EP 99106492
(43) Veröffentlichungstag der Anmeldung: 02.01.2002
(73) Patentinhaber: SIEMENS AKTIENGESELLSCHAFT, 80333 München (DE)
(72) Erfinder: TIEMANN, Peter, D-58452 Witten (DE); BOLMS, Hans-Thomas, D-45481 Mülheim A.D. Ruhr (DE)
(86) Internationale Anmeldenummer: EP0002348
(87) Internationale Veröffentlichungsnummer: WO00060219

(56) Entgegenhaltungen:
- EP-A- 0 690 205
- DE-A- 4 244 303
- US-A- 4 177 004
- US-A- 4 573 865

## Beschreibung

Die Erfindung betrifft eine Strömungsmaschine mit einer kühlbaren Anordnung mit einem ersten Wandelement und mit einem zweiten Wandelement. Die Erfindung betrifft weiterhin ein Verfahren zur Kühlung einer Anordnung in einer Strömungsmaschine mit einem ersten Wandelement und mit einem an das erste Wandelement angrenzenden zweiten Wandelement, mit einem Kühlmittel.

In einer Strömungsmaschine, beispielsweise in einer Gasturbine, wird durch ein strömendes heißes Aktionsfluid, z.B. ein Heißgas, infolge von dessen Expansion Nutzarbeit gewonnen. Im Hinblick auf die Erhöhung des Wirkungsgrades einer Strömungsmaschine wird unter anderem versucht eine möglichst hohe Temperatur des heißen Aktionsfluids zu erreichen. Die dem heißen Aktionsfluid unmittelbar ausgesetzten Bauteile sind daher thermisch sehr stark belastet. Im Falle einer Gasturbine betrifft dies zum Beispiel die Beschaufelung in der Turbine (Leitschaufeln und Laufschaufeln) sowie die den Raum mit dem strömenden heißen Aktionsfluid begrenzenden Wandelemente der Turbine. Es kommt also darauf an für diese Bauteile geeignete Werkstoffe zu finden, die bei möglichst hohen Temperaturen ausreichende Festigkeit besitzen sowie Verfahren zu entwikkeln, mit denen eine Kühlung dieser Bauteile möglich ist, um die hohen Temperaturen anwenden zu können. In einer Gasturbine wird das zur Kühlung erforderliche Kühlmittel üblicherweise einem an die Turbine angekoppelten Verdichter als Kühlluft entnommen. Um den mit dieser Kühlluftentnahme einhergehenden Wirkungsgradverlust so gering wie möglich zu halten, wird intensiv nach Kühlkonzepten gesucht, die einen möglichst effizienten Kühlmitteleinsatz gewährleisten.

In der US-Patentschrift 4,642,024 ist eine kühlbare Statorgruppe für ein Gasturbinentriebwerk beschrieben. Die Statorgruppe weist eine äußere Luftabdichtung sowie einen stromaufwärtigen Halter und einen stromabwärtigen Halter auf. Die Halter stützen die äußere Luftabdichtung mit Hilfe von Verhakungen über einen Strömungsweg für Arbeitsmedium ab. Dadurch ist eine konstruktive Dreiteilung der Luftabdichtung in einen stromabwärtigen und einen stromaufwärtigen Randbereich sowie einen zwischen den Randbereichen angeordneten Zentralbereich gegeben. Zur Kühlung der äußeren Luftabdichtung mit Kühlluft erfolgt zunächst eine Prallkühlung im Zentralbereich. Die Randbereiche, die aufgrund der Halter nicht direkt mit Kühlluft beaufschlagbar sind, werden gekühlt indem ein Teil der gesammelten Kühlluft durch die Halter hindurchgeleitet wird um eine Prallkühlung der Randbereiche zu ermöglichen. Dazu erstrecken sich Dosierlöcher durch die Halter, um die Kühlluft an den stromaufwärtigen und den stromabwärtigen Randbereich derselben äußeren Luftabdichtung zu leiten.

Aus der DE 197 33 148 C1 geht eine Kühlvorrichtung zur Kühlung einer ersten Stufe einer Gasturbine mit einer ersten Leitschaufel und einer ersten Laufschaufel mittels Kühlluft hervor. Die erste Leitschaufel weist eine Plattform auf, die ein Wandelement darstellt, welches den Strömumgskanal mit einem heißen Aktionsfluid begrenzt. An der Plattform der ersten Leitschaufel befindet sich eine erste Kammer sowie eine in Strömungsrichtung daran angrenzende zweite Kammer. Zwischen diesen beiden Kammern ist eine Wand angeordnet, die in die Plattform der Leitschaufel eingesetzt ist. Von einer ersten Kühlluftversorgung wird die erste Kammer über eine erste Kühlluftzuführung mit einem ersten Kühlluftstrom versorgt. Der erste Kühlluftstrom wird durch die Plattform hindurchgeführt und über die erste Stufe der Gasturbine in den Strömungskanal ausgelassen. Entsprechend wird die zweite Kammer mit einer zweiten Kühlluftversorgung mittels einer zweiten Kühlluftzuführung mit einem zweiten Kühlluftstrom versorgt, welcher anschließend durch die Plattform in die erste Stufe in den Strömungskanal ausgelassen wird. Dabei wird die erste Kühlluftversorgung mit Verdichterendluft mit einem ersten Druck betrieben, die zweite Kühlluftversorgung hingegen mit Verdichterluft mit einem zweiten Druck aus einer geeigneten Entnahme aus dem Verdichter, wobei der zweite Druck geringer ist als der erste Druck. Auf diese Weise wird die Leitschaufel mit unabhängigen Kühlmittelströmen mit unterschiedlichem Druck beaufschlagt und gekühlt.

In der US-Patentschrift 4,177,004 ist eine kühlbare Leitgittertragstruktur einer ersten Stufe (Eintrittsstufe) einer Turbine, insbesondere einer Gasturbine, beschrieben. An der Leitgittertragstruktur sind axial aufeinander folgend eine erste Leitschaufel mit einer Schaufelplattform und ein Führungsring angeordnet, wobei der Führungsring von der Schaufelplattform unter Bildung eines Spalts axial beabstandet ist. Im Betrieb der Turbine bilden die Schaufelplattform und der Führungsring die äußere Begrenzung eines den Rotor der Turbine antreibenden Heißgases. Die Anordnung wird mit Kühlluft aus einem der Turbine vorgeschalteten Verdichter gekühlt, wobei zunächst die innen hohle Leitschaufel mit Kühlluft über die Schaufelplattform beaufschlagt wird und die Kühlluft nach der Innenraumkühlung über Auslaßöffnungen in der Schaufel in den Heißgaskanal ausgelassen wird. Ein Teilstrom an Kühlluft wird von der Schaufelplattform über einen den Spalt überbrückenden Zwischenbereich dem Führungsring zur Prallkühlung zugeführt. Durch das vorzeitige Auslassen des Kühlmittels nach der Schaufelkühlung und durch die Leckverluste infolge von Kühlmittelaustritt durch den Spalt in den Heißgaskanal ist ein großer Kühlmittelbedarf zu verzeichnen.

Aufgabe der Erfindung ist es, eine Strömungsmaschine mit einer kühlbaren Anordnung mit einem ersten Wandelement und mit einem zweiten Wandelement anzugeben. Dabei soll insbesondere die Kühleffizienz verbessert werden. Eine weitere Aufgabe der Erfindung ist es, ein Verfahren zur Kühlung einer Anordnung mit einem ersten Wandelement und mit einem zweiten Wandelement in einer Strömungsmaschine anzugeben.

Erfindungsgemäß wird erstgenannte Aufgabe gelöst durch eine Strömungsmaschine mit einer kühlbaren Anordnung mit einem ersten Wandelement und mit einem entlang einer Längsachse an das erste Wandelement angrenzenden zweiten Wandelement, wobei jedes Wandelement eine Wand mit einem entlang der Längsachse an die Wand angrenzenden ersten Randbereich und mit einem entlang der Längsachse dem ersten Randbereich gegenüberliegenden zweiten Randbereich und eine einem heißen Aktionsfluid aussetzbare Heißseite aufweist, sowie dem ersten Wandelement ein von der Heißseite abgewandter erster Kühlbereich, welcher mit einem Kühlmittel beaufschlagbar ist, und dem zweiten Wandelement ein von der Heißseite abgewandter zweiter Kühlbereich zugeordnet ist, wobei der erste Kühlbereich und der zweite Kühlbereich miteinander in Strömungsverbindung stehen, so daß das Kühlmittel unter Vermeidung von Leckverlusten vom ersten Kühlbereich in den zweiten Kühlbereich gelangt.

Die Erfindung geht von der Überlegung aus, daß ein Wandelement in einer Strömungsmaschine, welches einem heißen Aktionsfluid, z.B. einem heißen Gas oder Dampf, ausgesetzt ist, durch die Temperatur des Aktionsfluids thermisch sehr stark belastet ist. Ein Wandelement dient hierbei der Begrenzung des Raums, der vom heißen Aktionsfluid durchströmt wird. Dieses Wandelement kann unter Ausnutzung bekannter Kühlmechanismen in einem Kühlbereich mit einem Kühlmittel beaufschlagt werden, um die dem heißen Aktionsfluid aussetzbare Heißseite des Wandelements zu kühlen. Dabei erfolgt ein Wärmeübergang von der Heißseite in den der Heißseite abgewandten Kühlbereich, wo das Kühlmittel die Wärme aufnimmt und diese abführt. Abhängig vom gewählten Kühlmechanismus und der Dauer der Wärmeaufnahme durch das Kühlmittel sowie der Temperaturdifferenz zwischen der Heißseite und dem Kühlmittel im Kühlbereich, wird sich das Kühlmittel dabei mehr oder weniger stark erwärmen. Dabei wird in herkömmlichen Ausgestaltungen die Temperaturdifferenz nur zu einem Teil für Kühlzwecke ausgenutzt, indem beispielsweise das Kühlmittel nach der Kühlung des Wandelements bereits bei vergleichsweise niedrigen Temperaturen zur Heißseite ausgelassen wird.

Mit der Erfindung wird ein neuer Weg beschritten, um eine Anordnung mit einem ersten Wandelement und mit einem an das erste Wandelement angrenzenden zweiten Wandelement mit einem Kühlmittel effizient zu kühlen. Es ergibt sich insbesondere der Vorteil einer Mehrfachnutzung des Kühlmittels zur Kühlung verschiedener Wandelemente, was den Kühlmitteleinsatz in einer Strömungsmaschine gegenüber bisher bekannten Ausgestaltungen erheblich reduziert. Durch die Mehrfachnutzung des Kühlmittels wird das Kühlmittel infolge des Wärmeübergangs in den verschiedenen Kühlbereichen auf höhere Temperaturen erwärmt, als dies bei herkömmlichen Ausführungen der Fall ist, und somit der Wärmeinhalt pro eingesetzter Kühlmittelmenge gesteigert. Hierbei wird der Verlust an Kühlmittel zwischen aneinander grenzenden Wandelementen oder infolge vorzeitigem Auslassen des Kühlmittels nach der Heißseite der Anordnung vermieden.

Vorzugsweise ist die Strömungsverbindung durch einen Übergangsbereich hergestellt, der den zweiten Randbereich des ersten Wandelements und den axial daran angrenzenden ersten Randbereich des zweiten Wandelements umfaßt. Die Strömungsverbindung zwischen dem ersten Kühlbereich und dem zweiten Kühlbereich wird somit auf möglichst direktem Wege hergestellt. Diese kann beispielsweise durch eine entsprechende Kühlmitteldurchführung, die sich vom ersten Kühlbereich durch den Übergangsbereich in den zweiten Kühlbereich erstreckt, realisiert sein. Durch die Ausgestaltung als eine Kühlmitteldurchführung im Übergangsbereich ergibt sich insbesondere der Vorteil einer konvektiven Kühlwirkung über den gesamten Übergangsbereich hinweg. Zugleich ist eine möglichst direkte Überströmung von Kühlmittel aus dem ersten Kühlbereich in den zweiten Kühlbereich sichergestellt, so daß das Kühlmittel sich im Übergangsbereich nur geringfügig erwärmt und somit für weitere Kühlzwecke im zweiten Kühlbereich zur Verfügung steht. Vorteilhafterweise ist mit der Strömungsverbindung nur ein geringer Druckverlust des Kühlmittels beim Überströmen vom ersten in den zweiten Kühlbereich verbunden.

Vorzugsweise weist der Übergangsbereich eine Passung, insbesondere eine Dichtung, auf, welche weitgehend verhindert, daß das heiße Aktionsfluid in den ersten und den zweiten Kühlbereich und/oder Kühlmittel zur Heißseite gelangt. Durch diese Ausgestaltung wird eine für das heiße Aktionsfluid weitgehend undurchlässige Anordnung axial aneinander grenzender Wandelemente realisiert. Somit wird gewährleistet, daß heißes Aktionsfluid praktisch nicht von der Heißseite eines Wandelements zu der der Heißseite abgewandten Seite eines Wandelements überströmt. Dies wirkt sich günstig auf den Kühlmitteleinsatz und die Kühleffizienz aus. Insbesondere werden dadurch auch andere Bauteile geschützt, die sich auf der von dem heißen Aktionsfluid abgewandten Seite der Anordnung befinden und thermisch nicht so hoch belastbar sind. Die Passung kann dabei durch entsprechende Ausgestaltung des zweiten Randbereichs des ersten Wandelements und des axial daran angrenzenden ersten Randbereichs des zweiten Wandelements realisiert sein. Eine mögliche Ausgestaltung ist auch durch ein Metalldichtelement gegeben, das in einander gegenüberliegende Nuten in den aneinander grenzenden Randbereichen der benachbarten Wandelemente eingreift. Durch die Passung wird der Verlust an Kühlmittel durch Leckverluste zwischen aneinder grenzenden Wandelementen oder durch vorzeitiges Auslassen des Kühlmittels nach der Heißseite der Anordnung vermindert. Durch die konstruktive Ausgestaltung der Passung und die Wahl des Drukkes des Kühlmittels in den Kühlbereichen der Anordnung wird erreicht, daß die Druckdifferenz zwischen dem Kühlmittel und dem heißen Aktionsfluid hinreichend gering aber genügend hoch ist, um gegenüber dem heißen Aktionsfluid eine Sperrluftwirkung zu erzielen. Hierfür muß der in den Kühlbereichen herrschende Druck des Kühlmittels nur geringfügig über dem lokalen Druck des heißen Aktionsfluids liegen. Je dichter die Passung hergestellt ist, desto geringer fallen die Leckverluste an dieser Stelle aus.

Bevorzugt umfaßt der erste Kühlbereich einen Prallkühlbereich. Das Prallkühlen oder Aufprallkühlen ist eine der wirksameren Techniken, die beim Kühlen in einer Strömungsmaschine verwendet werden. Bei dieser Kühlmethode wird üblicherweise ein Kühlmittel durch eine Vielzahl von Öffnungen in einer Platte (Prallkühlplatte) geführt, die der zu kühlenden Oberfläche benachbart ist. Infolgedessen prallt das Kühlmittel im Prallkühlbereich in einer entsprechenden Vielzahl von Kühlmittelstrahlen im wesentlichen senkrecht auf die zu kühlende Oberfläche. Bei der Wechselwirkung mit der zu kühlenden Oberfläche nimmt das Kühlmittel Wärme auf, die infolge des Wärmeübergangs von der mit dem heißen Aktionsfluid beaufschlagten Heißseite des Wandelements in den von der Heißseite abgewandten Prallkühlbereich transportiert wird, und erwärmt sich hierbei. Die Kühleffizienz bei der Prallkühlung ist höher als zum Beispiel bei einer herkömmlichen Konvektionskühlung, bei der das Kühlmittel im wesentlichen parallel zu einer zu kühlenden Oberfläche geführt wird. Mit der Durchführung einer Prallkühlung im Prallkühlbereich ist eine sehr wirksame Kühlung des ersten Wandelements erreicht. Das Wandelement kann dadurch höheren Temperaturen des heißen Aktionsfluids ausgesetzt werden, da bei gleichem Wärmeeintrag in das Wandelement dieses gegenüber anderen Kühlmethoden auf einer niedrigeren Materialtemperatur gehalten werden kann.
Bevorzugt umfaßt der zweite Kühlbereich einen Prallkühlbereich und einen dem Prallkühlbereich vorgeschalteten Umlenkbereich für Kühlmittel. Hierdurch ist auch das zweite Wandelement, analog wie oben beschrieben, mittels Prallkühlung effizient kühlbar. Der Umlenkbereich dient dabei der Strömungsführung des Kühlmittels zur Prallkühlung im zweiten Kühlbereich. Der Umlenkbereich ist zu diesem Zweck beispielsweise mit einem geeigneten Umlenkblech ausgerüstet, welches die Kühlmittelströmung möglichst in eine Richtung senkrecht auf die zu kühlende Oberfläche in den Prallkühlbereich umlenkt.

Vorzugsweise umfaßt der zweite Kühlbereich einen Konvektionskühlbereich, der dem Prallkühlbereich axial nachgeordnet ist. Durch den Konvektionskühlbereich ist eine Weiterverwendung des Kühlmittels zur konvektiven Kühlung des zweiten Wandelements möglich. Bei der Konvektionskühlung bildet die Wand des innen hohlen Wandelements die Trennwand zwischen dem Kühlmittel und dem heißen Aktionsfluid. Das Kühlmittel wird bei dieser Kühlmethode im wesentlichen parallel zur Wand, das heißt entlang einer zu kühlenden Oberfläche geführt. Konstruktiv kann dies so ausgeführt sein, daß das Kühlmittel durch mehrere Konvektionskühlkanäle in der Wand geführt ist.

Vorzugsweise weist der Konvektionskühlbereich einen Kühlmittelauslaß auf, der sich durch den zweiten Randbereich des zweiten Wandelements in die Heißseite erstreckt. Im Anschluß an die Konvektionskühlung im Konvektionskühlbereich ist somit ein Auslassen des Kühlmittels zur Heißseite des Wandelements möglich. Dieser Kühlmittelauslaß kann beispielsweise als Kanal oder Bohrung ausgeführt sein, die unter möglichst flachem Winkel in die Heißseite des Wandelements mündet. Dadurch besteht die Möglichkeit der Filmkühlung eines weiteren Wandelements, welches axial dem zweiten Wandelement nachgeordnet ist und an dieses angrenzt. Durch entsprechende konstruktive Ausgestaltung des Kühlmittelauslasses wird eine Verzögerung (Diffusorwirkung) der nach der Heißseite austretenden Kühlmittelströmung erreicht, was die Ausbildung eines Films zur Filmkühlung sehr begünstigt. Die Ausströmrichtung des Kühlmittels sollte dabei möglichst tangential zur Heißseite des Wandelements sein. Der auf diese Weise ausgestaltete Kühlmittelauslaß sorgt für eine gute Ausbildung eines Kühlfilms und für eine wirksame Weiterführung und Ausbreitung eines Kühlfilms entlang der Heißseite eines weiteren axial an das zweite Wandelement angrenzenden Wandelements. Das Kühlmittel dient vorteilhafterweise auch dem Korrosionsschutz der Heißseite des weiteren Wandelements, sofern das Kühlmittel die Heißseite vollständig als flächiger Kühlfilm überdeckt und somit ein zusammenhängender Schutzfilm zum Wärmeschutz vorliegt.

In einer bevorzugten Ausgestaltung umfaßt der zweite Kühlbereich einen Konvektionskühlbereich. Insbesondere kann sich der Konvektionskühlbereich über nahezu den gesamten zweiten Kühlbereich erstrecken.

Bevorzugt ist das erste Wandelement und/oder das zweite Wandelement eine Plattform einer Turbinenleitschaufel oder ein Führungsring. Die Plattform einer Turbinenleitschaufel dient der Fixierung der Turbinenleitschaufel am inneren Turbinengehäuse. Die Plattform stellt dabei ein Wandelement mit einer Heißseite dar und begrenzt ein strömendes heißes Aktionsfluid, beispielsweise ein heißes Gas oder Dampf. Ein Führungsring ist als Wandelement in einer Strömungsmaschine zwischen den Plattformen zweier axial beabstandeter Turbinenleitschaufeln angeordnet. Der Führungsring weist eine Heißseite auf, die dem heißen Aktionsfluid aussetzbar ist und die in radialer Richtung von den äußeren Enden der Turbinenlaufschaufeln durch einen Spalt beabstandet ist.

In einer bevorzugten Ausführungsform ist das erste Wandelement eine Plattform einer Turbinenleitschaufel und das axial daran angrenzende zweite Wandelement ein Führungsring. Die Plattform der Turbinenleitschaufel, die dem Führungsring vorgeordnet ist, ist wegen des größeren Wärmeübergangs von dem heißen Aktionsfluid in das Schaufelblatt und der Wärmeleitung vom Schaufelblatt in die Plattform thermisch stärker belastet als der Führungsring. Es ist daher von Vorteil das Kühlmittel zuerst zur Kühlung der Plattform der Turbinenleitschaufel einzusetzen. Der axial an die Plattform angrenzende Führungsring weist dann bevorzugterweise einen Kühlmittelauslaß auf, der eine Filmkühlung der Heißseite eines dem Führungsring axial nachgeordneten Wandelements, z.B einer Plattform einer weiteren Turbinenleitschaufel, ermöglicht.

Die auf ein Verfahren gerichtete Aufgabe wird erfindungsgemäß gelöst durch ein Verfahren zur Kühlung einer Anordnung mit einem ersten Wandelement und mit einem entlang einer Längsachse an das erste Wandelement angrenzenden zweiten Wandelement in einer Strömungsmaschine, wobei jedes Wandelement eine einem heißen Aktionsfluid aussetzbare Heißseite aufweist, sowie dem ersten Wandelement ein von der Heißseite abgewandter erster Kühlbereich und dem zweiten Wandelement ein von der Heißseite abgewandter zweiter Kühlbereich zugeordnet ist, bei dem ein Kühlmittel dem ersten Kühlbereich zugeführt wird, das erste Wandelement mit einem Kühlmittel im ersten Kühlbereich prallgekühlt wird, wobei das Kühlmittel unter Vermeidung von Leckverlusten nach der Prallkühlung im ersten Kühlbereich zur Kühlung des zweiten Wandelements im zweiten Kühlbereich verwendet wird.

Das Verfahren zeichnet sich dadurch aus, daß ein Kühlmittel nach der Kühlung eines ersten Wandelements in einem ersten Kühlbereich (Prallkühlung) zur Kühlung eines zweiten Wandelements in einem zweiten Kühlbereich weiterverwendet wird. Dabei wird der Verlust an Kühlmittel zwischen aneinander grenzenden Wandelementen oder infolge vorzeitigem Auslassen des Kühlmittels nach der Heißseite der Anordnung vermieden. Gegenüber herkömmlichen Verfahren, bei denen zur Kühlung verschiedener Wandelemente auch unterschiedliche Kühlmittelströme verwendet werden, wird bei diesem Verfahren ein erheblich geringerer Verbrauch an Kühlmittel und folglich eine höhere Effizienz erzielt. Dabei wird das erste Wandelement im ersten Kühlbereich mittels Prallkühlung gekühlt und dadurch auf einer maximalen Materialtemperatur gehalten, die geringer ist als die Temperatur des heißen Aktionsfluids. Im ersten Kühlbereich wird Wärme auf das Kühlmittel übertragen, wodurch sich dieses erwärmt. Die Temperaturerhöhung des Kühlmittels infolge Prallkühlung beträgt bei Strömungsmaschinen, insbesondere bei Gasturbinen, beispielsweise zwischen etwa 50 °C bis 150 °C. Das so erwärmte Kühlmittel wird anschließend zur Kühlung im zweiten Kühlbereich weiterverwendet, wobei verschiedene Kühlmechanismen ausnutzbar sind. In konventionellen Verfahren ist hingegen die Kühlung eines zweiten Wandelements in einem zweiten Kühlbereich nicht vorgesehen. Das Kühlmittel wird bei diesen Verfahren üblicherweise nach einer erfolgten Prallkühlung eines Wandelements durch Kühlmitteldurchführungen direkt zur Heißseite des Wandelements geleitet. Dort wird es mit einer im Vergleich zur Temperatur des heißen Aktionsfluids relativ niedrigen Temperatur bereits ausgelassen. Das ausgelassene Kühlmittel kann dann allenfalls noch zur Filmkühlung an der Heißseite dienen.

Mit dem Verfahren wird die Temperaturdifferenz, die zwischen dem heißen Aktionsfluid und dem Kühlmittel vorhanden ist, möglichst gut zur Wärmeabfuhr ausgenutzt. Durch die Mehrfachnutzung des Kühlmittels wird das Kühlmittel gegenüber anderen Verfahren auf eine deutlich höhere Temperatur gebracht, so daß die auf den Kühlmitteleinsatz bezogene Wärmeabfuhr entsprechend höher ist. Das Kühlverfahren ist insbesondere von Bedeutung in allen Anwendungen, die die Kühlung und den effizienten Kühlmitteleinsatz in einer Strömungsmaschine betreffen.

In einer Strömungsmaschine, insbesondere in einer Gasturbine, wird Kühlmittel, z.B. Kühlluft, außer zur Schaufelkühlung verwendet als sogenannte Sperrluft, zur Kühlung von Bauteilen des Turbinenläufers und zur Kühlung der stillstehenden heißen Bauteile innerhalb des Heißgaskanals. Diese zumeist einem der Turbine vorgeschalteten Verdichter entnommenen Kühlluftmengen leisten nur zum Teil Expansionsarbeit in der Turbine, nämlich insofern sie dem Strom aus heißen Aktionsfluid zugemischt werden können. Je nach Höhe der Turbineneintrittstemperatur und Größe der Anlage kann man mit einem Kühlluftverbrauch von ungefähr 7% (800 °C) bis 13% (1200 °C) der vom Verdichter angesaugten Luftmenge rechnen. Bei kleinen Anlagen sind diese Prozentsätze um etwa weitere 3% größer, bei sehr großen stationären Anlagen um etwa 3% kleiner. An der Expansionsarbeit sind hiervon je nach der Turbineneintrittstemperatur etwa 2% (bei 800 °C) bis 3,5% (bei 1200 °C) von der vom Verdichter angesaugten Luftmenge nicht beteiligt. Eine Mehrfachnutzung von Kühlmittel, wie sie bei dem Verfahren vorgesehen ist, wirkt sich demzufolge direkt auf den gesamten Kühlmittelverbrauch und somit günstig auf den Wirkungsgrad einer Strömungsmaschine aus.

Vorzugsweise wird das Kühlmittel nach der Prallkühlung im ersten Kühlbereich zur Prallkühlung im zweiten Kühlbereich strömungsgeführt. Die Prallkühlung stellt, wie bereits im Vorrichtungsteil näher beschrieben, eine sehr effiziente Kühlmethode dar. Daher wird im zweiten Kühlbereich bevorzugt eine Prallkühlung durchgeführt. Zur Prallkühlung im zweiten Kühlbereich wird das Kühlmittel zunächst in geeigneter Weise strömungsgeführt, d.h. es wird so umgelenkt, daß eine effiziente Prallkühlung möglich ist. Hierzu ist im Umlenkbereich beispielsweise ein Umlenkblech vorgesehen, welches die Kühlmittelströmung möglichst in eine Richtung senkrecht auf die zu kühlende Oberfläche in den Prallkühlbereich umlenkt. Infolge der Prallkühlung im zweiten Kühlbereich wird Wärme wirkungsvoll aus dem zweiten Wandelement transportiert und das Kühlmittel um eine Temperatur zwischen etwa 50 °C bis 150 °C erwärmt.

Bevorzugt wird im zweiten Kühlbereich das Kühlmittel nach der Prallkühlung zur konvektiven Kühlung weiterverwendet. Im Anschluß an die Prallkühlung im zweiten Kühlbereich wird das Kühlmittel unter Ausnutzung anderer Kühlmechanismen zur Kühlung des zweiten Wandelements weiterverwendet. Das Verfahren sieht hier eine konvektive Kühlung vor. Der zweite Kühlbereich umfaßt daher einen Konvektionskühlbereich, in welchem die konvektive Kühlung durchgeführt wird. Bei der konvektiven Kühlung wird der Kühlmittelstrom beispielsweise durch einen oder mehrere Kühlmittelkanäle geführt, die im Konvektionskühlbereich gebildet sind. Der Wärmeübergang erfolgt von der Heißseite des mit einem heißen Aktionsfluid beaufschlagten Wandelments in den Konvektionskühlbereich hinein, wo das Kühlmittel die Wärme aufnimmt. Die Temperaturerhöhung des Kühlmittels infolge der konvektiven Kühlung beträgt dabei zwischen etwa 20 bis 60 °C.

Vorzugsweise wird das Kühlmittel zur Heißseite des zweiten Wandelements ausgelassen. Nach dem Auslassen des Kühlmittels aus der Anordnung sieht das Verfahren die Weiterverwendung des Kühlmittels zur Filmkühlung der Heißseite des zweiten Wandelements oder der Heißseite eines dem zweiten Wandelement axial benachbarten weiteren Wandelements vor. Die Ausströmrichtung des Kühlmittels sollte hierfür möglichst tangential zur Heißseite des zweiten Wandelements sein. Ein zu diesem Zweck ausgestalteter Kühlmittelauslaß sorgt für eine gute Ausbildung eines Kühlfilms und für eine wirksame Weiterführung und Ausbreitung eines Kühlfilms entlang der Heißseite. Bei der Filmkühlung übernimmt der Kühlfilm auch den Korrosionsschutz der Heißseite, sofern der Kühlmittelstrom die Heißseite vollständig als zusammenhängender Schutzfilm überdeckt. Da die Effektivität der Filmkühlung sich nur geringfügig mit steigender Temperatur verringert, ist mit dem Verfahren eine sehr vorteilhafte Abfolge und Ausnutzung der angegebenen Kühlmechanismen gegeben.

Bevorzugt wird das Kühlmittel in der Anordnung von einer Zuführungstemperatur auf eine Auslaßtemperatur erwärmt, wobei die Zuführungstemperatur zwischen etwa 150 °C bis 500 °C, insbesondere zwischen etwa 250 °C bis 450 °C, beträgt. Weiter bevorzugt beträgt die Auslaßtemperatur zwischen etwa 350 °C bis 850 °C, insbesondere zwischen etwa 500 °C bis 700 °C.

Die Strömungsmaschine mit einer kühlbaren Anordnung von Wandelementen sowie das Verfahren zur Kühlung einer Anordnung von Wandelementen in einer Strömungsmaschine mit einem Kühlmittel werden beispielhaft anhand der in der Zeichnung dargestellten Ausführungsbeispiele näher erläutert. Es zeigen hierbei teilweise schematisch und vereinfacht:
- FIG 1: einen Halbschnitt durch eine Gasturbine mit Verdichter, Brennkammer und Turbine,
- FIG 2: einen Längsschnitt durch einen Ausschnitt einer Turbine mit einer erfindungsgemäßen Kühlung,
- FIG 3: ein Diagramm mit einem vereinfachten Temperaturverlauf für ein Kühlmittel nach dem erfindungsgemäßen Verfahren.

Gleiche Bezugszeichen haben in den Figuren jeweils die gleiche Bedeutung.

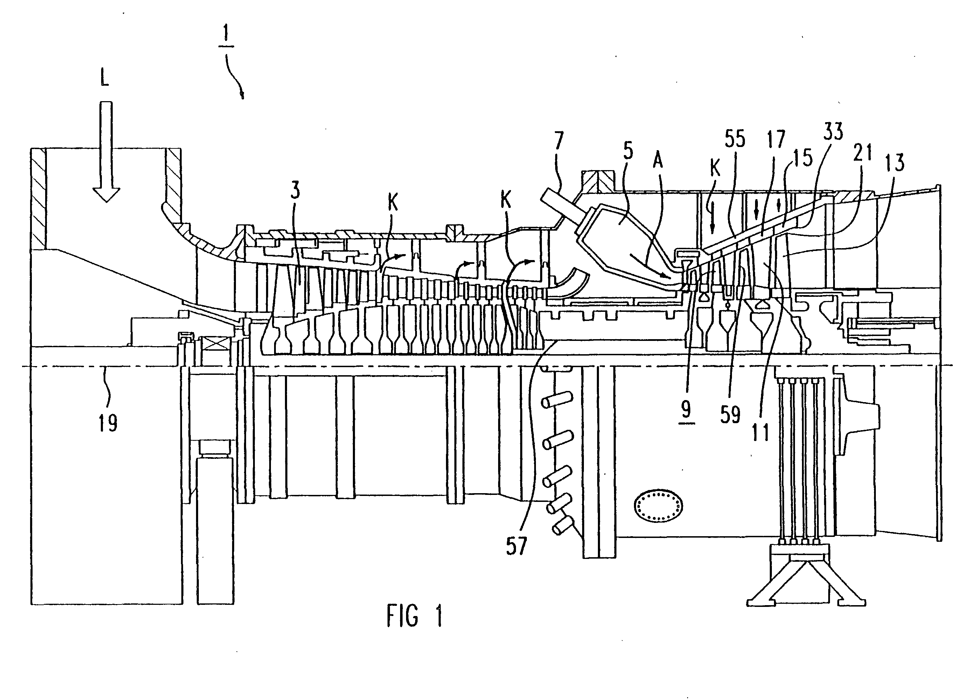

In Figur 1 ist ein Halbschnitt durch eine Gasturbine 1 dargestellt. Die Gasturbine 1 weist einen Verdichter 3 für Verbrennungsluft, eine Brennkammer 5 mit Brenner 7 für einen flüssigen oder gasförmigen Brennstoff sowie eine Turbine 9 zum Antrieb des Verdichters 3 und eines in Figur 1 nicht dargestellten Generators auf. In der Turbine 9 sind feststehende Leitschaufeln 11 und rotierbare Laufschaufeln 13 auf jeweiligen, sich radial erstreckenden, im Halbschnitt nicht gezeigten Kränzen entlang der Rotationsachse 19 der Gasturbine 1 angeordnet. Dabei wird ein entlang der Rotationsachse 19 aufeinanderfolgendes Paar aus einem Kranz von Leitschaufeln 11 (Leitschaufelkranz) und einem Kranz von Laufschaufeln 13 (Laufschaufelkranz) als Turbinenstufe bezeichnet. Jede Leitschaufel 11 weist eine Plattform 17 auf, welche zur Fixierung der betreffenden Leitschaufel 11 am inneren Turbinengehäuse 55 angeordnet ist. Die Plattform 17 stellt dabei ein Wandelement in der Turbine 9 dar. Die Plattform 17 ist ein thermisch stark belastetes Bauteil, welches die äußere Begrenzung eines heißen Aktionsfluids A, insbesondere des Heißgaskanals 59 in der Turbine 9, bildet. Die Laufschaufel 13 ist auf dem entlang der Rotationsachse 19 der Gasturbine 1 angeordneten Turbinenläufer 57 befestigt. Ein Führungsring 15 ist als Wandelement in einer Gasturbine 1 zwischen den Plattformen 17 zweier axial beabstandeter, benachbarter Leitschaufeln 11 angeordnet. Der Führungsring 15 sowie die Plattform 17 der Leitschaufel 11 weisen jeweils eine Heißseite 33 auf, die im Betrieb der Gasturbine dem heißen Aktionsfluid A, insbesondere dem Heißgas, ausgesetzt ist. Die Heißseite 33 des Führungsrings 15 ist dabei in radialer Richtung vom äußeren Ende 21 der Laufschaufel 13 durch einen Spalt beabstandet. Die Plattform 17 der Leitschaufel 11 und der axial daran angrenzende Führungsring 15 sind jeweils kühlbare Wandelemente, die zur Kühlung mit einem Kühlmittel K beaufschlagt werden. Im Betrieb der Gasturbine 1 wird Frischluft L aus der Umgebung angesaugt. Die Luft L wird im Verdichter 3 verdichtet und dadurch gleichzeitig vorgewärmt. In der Brennkammer 5 wird die Luft L mit dem flüssigen oder gasförmigen Brennstoff zusammengebracht und verbrannt. Ein zuvor dem Verdichter 3 aus geeigneten Entnahmen entnommener Teil der Luft L dient als Kühlluft K zur Kühlung der Turbinenstufen, wobei z.B. die erste Turbinenstufe mit einer Turbinen-eintrittstemperatur von etwa 750 °C bis 1200 °C beaufschlagt wird. In der Turbine 9 erfolgt eine Entspannung und Abkühlung des heißen Aktionsfluids A, insbesondere des Heißgases, welches durch die Turbinenstufen strömt.

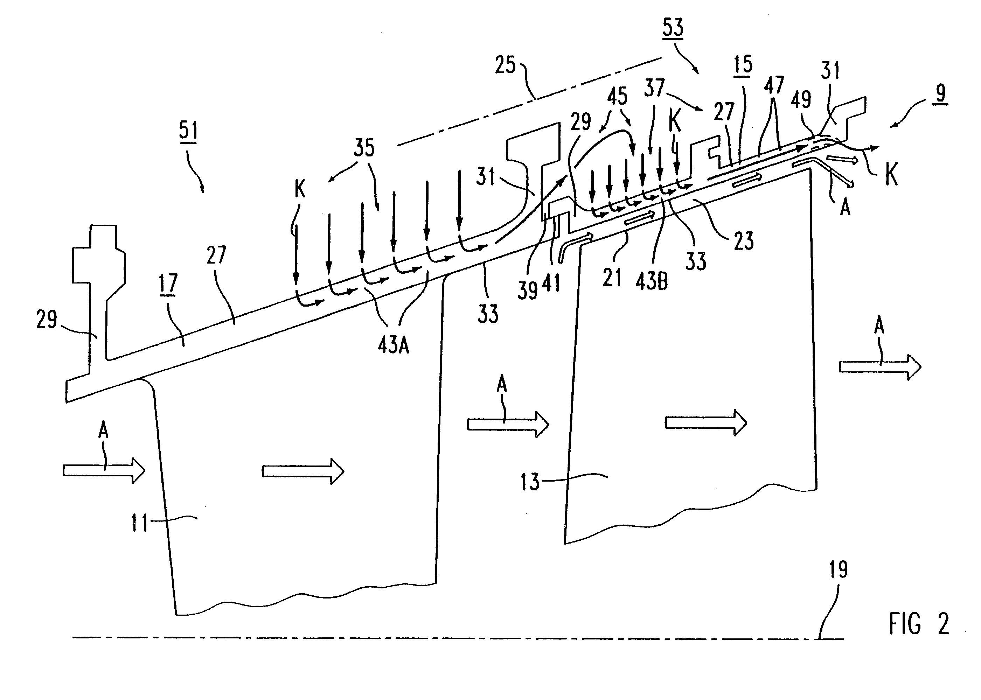

Figur 2 zeigt in einem Längsschnitt einen Ausschnitt der in Figur 1 dargestellten Turbine 9. Eine Turbinenleitschaufel 11 und eine Turbinenlaufschaufel 13 sind entlang der Rotationsachse 19 der Turbine 9 aufeinanderfolgend angeordnet. Die Turbinenleitschaufel 11 weist eine Plattform 17, im folgenden als erstes Wandelement 51 bezeichnet, auf. Entlang einer Längsachse 25 grenzt an das erste Wandelement 51 ein Führungsring 15, im folgenden als zweites Wandelement 53 bezeichnet, an. Die Wandelemente 51, 53 weisen jeweils eine Wand 27 auf, an die entlang der Längsachse 25 ein erster Randbereich 29 und ein entlang der Längsachse 25 dem ersten Randbereich 29 gegenüberliegender zweiter Randbereich 31 angrenzen. Jedes der Wandelemente 51, 53 hat eine Heißseite 33, welche einem heißen Aktionsfluid A, z.B. einem heißen Gas oder Dampf, aussetzbar ist. Dem ersten Wandelement 51 ist ein von der Heißseite 33 abgewandter erster Kühlbereich 35 und dem zweiten Wandelement 53 ein von der Heißseite 33 abgewandter zweiter Kühlbereich 37 zugeordnet. Der erste Kühlbereich 35 und der zweite Kühlbereich 37 stehen miteinander in Strömungsverbindung, so daß ein Kühlmittel K vom ersten Kühlbereich 35 in den zweiten Kühlbereich 37 gelangt. Die Strömungsverbindung ist durch einen Übergangsbereich 39 hergestellt, wobei der zweite Randbereich 31 des ersten Wandelements 51 und der axial daran angrenzende erste Randbereich 29 des zweiten Wandelements 53 sich überlappen. Der Übergangsbereich 39 weist eine Passung 41 auf, welche weitgehend verhindert, daß an dieser Stelle das heiße Aktionsfluid A in den ersten und den zweiten Kühlbereich 35, 37 und/oder das Kühlmittel K zur Heißseite 33 der Anordnung 51, 53 gelangt. Die Passung 41 ist durch die entlang der Längsachse 25 aneinander grenzenden Randbereiche 31, 29 des ersten Wandelements 51 und des zweiten Wandelements 53 hergestellt. Alternative Ausgestaltungen, beispielsweise in Form eines Metalldichtelements, welches in gegenüberliegende Nuten in den Randbereichen 31, 29 eingreift, sind ebenfalls realisierbar. Der erste Kühlbereich 35 umfaßt einen Prallkühlbereich 43A. Der zweite Kühlbereich 37 umfaßt einen Prallkühlbereich 43B und einen dem Prallkühlbereich 43B vorgeschalteten Umlenkbereich 45 für Kühlmittel K. Der erste und der zweite Kühlbereich 35, 37 sind jeweils im zugehörigen Prallkühlbereich 43A, 43B mit einem Kühlmittel K zur Prallkühlung beaufschlagbar. Der zweite Kühlbereich 37 umfaßt einen Konvektionskühlbereich 47, der dem Prallkühlbereich 43B entlang der Längsachse 25 nachgeordnet ist. Der Konvektionskühlbereich 47 erstreckt sich entlang der Längsachse 25, so daß ein Kühlmittel K entlang der Wand 27 des zweiten Wandelements 53 in einer Strömungrichtung vom ersten Randbereich 29 zum zweiten Randbereich 31 geführt wird. Der Konvektionskühlbereich 47 weist einen Kühlmittelauslaß 49 auf, der sich durch den zweiten Randbereich 31 des zweiten Wandelements 53 in die Heißseite 33 erstreckt. Im Betrieb der Turbine 9 strömt das heiße Aktionsfluid A, z.B. ein heißes Gas oder Dampf, entlang der Rotationsachse 19 und verrichtet an der Leitschaufel 11 und der Laufschaufel 13 Expansionsarbeit. Ein geringerer Teil des heißen Aktionsfluids A strömt durch den zwischen der Heißseite 33 des zweiten Wandelements 53 und dem äußeren Ende 21 der Laufschaufel 13 gebildeten Spalt 23. Dieser Anteil verrichtet keine Arbeit an der Laufschaufel 13 und wird daher als Spaltverlust bezeichnet.

Gemäß dem Kühlverfahren wird die Anordnung 51, 53 folgendermaßen gekühlt: Ein Kühlmittel K, vorzugsweise Kühlluft aus einer geeigneten Entnahme eines in Figur 2 nicht gezeigten, der Turbine 9 vorgeschalteten Verdichters 3 (siehe Figur 1), wird dem ersten Kühlbereich 35 zugeführt. Das erste Wandelement 51 wird im Prallkühlbereich 43A mit dem Kühlmittel K beaufschlagt und prallgekühlt. Infolge der Prallkühlung wird das Kühlmittel K erwärmt. Anschließend wird das Kühlmittel K nach der Prallkühlung im ersten Kühlbereich 35 zur Kühlung des zweiten Wandelements 53 im zweiten Kühlbereich 37 weiterverwendet. Dazu durchströmt das Kühlmittel K zunächst den Übergangsbereich 39, der die Strömungsverbindung zwischen dem ersten Kühlbereich 35 und dem zweiten Kühlbereich 53 herstellt. Im Übergangsbereich 39 tritt konvektive Kühlung auf, da das Kühlmittel vom ersten Kühlbereich 35 durch den zweiten Randbereich 31 des ersten Wandelements 51 geführt ist. Das so weiter erwärmte Kühlmittel K wird anschließend im Umlenkbereich 45 umgelenkt, so daß die Strömungsrichtung sich möglichst senkrecht zur Wand 27 des zweiten Wandelements 53 einstellt. Dadurch wird eine effiziente Prallkühlung im Prallkühlbereich 43B des zweiten Kühlbereichs 37 ermöglicht. Das Kühlmittel K wird infolge der Prallkühlung weiter erwärmt. Das Kühlmittel K wird nach der Prallkühlung im zweiten Kühlbereich 37 zur konvektiven Kühlung genutzt. Das Kühlmittel K strömt hierzu durch den konvektiven Kühlbereich 47, der dem Prallkühlbereich 43B axial nachgeordnet ist. Schließlich wird das Kühlmittel K, das durch die konvektive Kühlung sich weiter erwärmt hat, zur Heißseite 33 des zweiten Wandelements 53 ausgelassen. Dort wird es zur Filmkühlung der Heißseite 33 des zweiten Wandelements 53 oder vorzugsweise zur Filmkühlung der Heißseite eines an das zweite Wandelement 53 axial angrenzenden weiteren Wandelements, welches in Figur 2 nicht gezeigt ist, abschließend weiterverwendet. In einer bevorzugten Ausgestaltung ist dabei das weitere Wandelement eine Plattform 17 einer Leitschaufel 11 (vgl. Figur 1). Bei der Filmkühlung wird ein durch das Kühlmittel K gebildeter Kühlfilm entlang der Heißseite 33 ausgebildet. Der Kühlfilm schützt das weitere Wandelement vor den hohen thermischen und korrosiven Belastungen durch das heiße Aktionsfluid A. Dieser Kühlfilm erfüllt seine Funktion solange, bis er abreißt oder verwirbelt ist. Die Kühleffizienz dieses Kühlfilms ist dabei umso effektiver, je besser die Ausströmrichtung des Kühlmittels K mit der Strömungsrichtung des heißen Aktionsfluids A, z.B. des heißen Gases oder Dampfes, übereinstimmt. Bei dem Verfahren wird das Kühlmittel K zur Kühlung unterschiedlicher Kühlbereiche 35, 37 verschiedener Wandelemente 53, 51 eingesetzt. Dabei kommen unterschiedliche Kühlmechanismen, die nacheinander ausgeführt werden, zur Anwendung. Infolgedessen wird das Kühlmittel K sukzessive erwärmt.

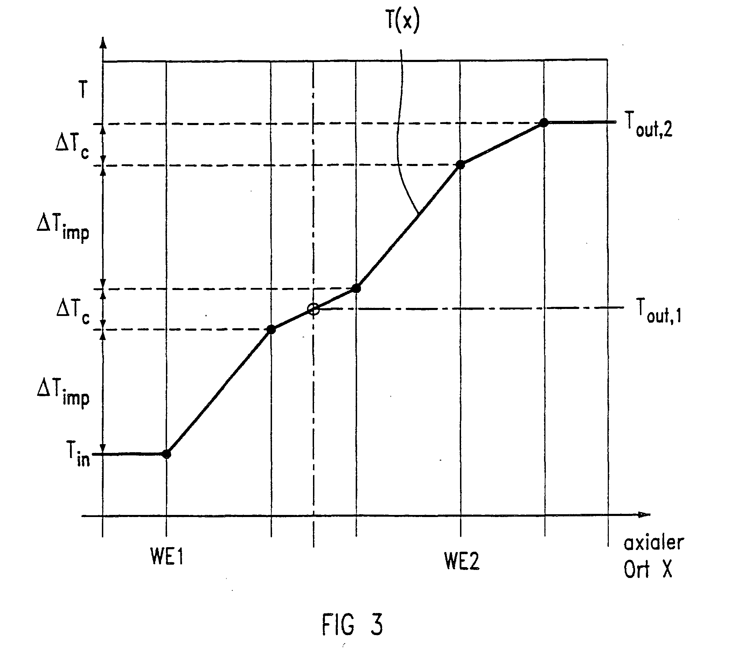

Der Temperaturverlauf für das Kühlmittel K bei dem Verfahren ist in Figur 3 anhand eines Diagramms qualitativ dargestellt. Auf der X-Achse des Diagramms ist der axiale Ort aufgetragen, an dem sich das Kühlmittel befindet. Auf der Y-Achse des Diagramms ist die Kühlmitteltemperatur T aufgetragen, die das Kühlmittel an einem bestimmten Ort hat. Die Kühlmitteltemperatur T als Funktion des Orts ist in dem Diagramm als Kurvenzug T(x) veranschaulicht. Die axial aneinander grenzenden Wandelemente 51, 53 (vergleiche Figur 2) sind im Diagramm auf der X-Achse durch die Bereiche WE1 bzw. WE2 bezeichnet. Das Kühlmittel K wird zunächst dem ersten Kühlbereich 35 mit einer Zuführungstemperatur Tᵢₙ zugeführt. Die Zuführungstemperatur Tᵢₙ beträgt dabei zwischen etwa 150 °C bis 500 °C, insbesondere zwischen etwa 250 °C bis 450 °C. Infolge der Prallkühlung im ersten Kühlbereich 35 wird das Kühlmittel K um eine Prallkühltemperaturerhöhung ΔTᵢₘₚ erwärmt. Die Prallkühltemperaturerhöhung ΔTᵢₘₚ beträgt zwischen etwa 50 bis 150 °C. Nach der Prallkühlung im ersten Kühlbereich 35 wird das Kühlmittel K vom ersten Kühlbereich 35 in den zweiten Kühlbereich 37 strömungsgeführt. Diese Strömungsführung ist mit einer konvektiven Kühlung verbunden. Infolge der konvektiven Kühlung erwärmt sich das Kühlmittel K um eine Konvektionstemperaturerhöhung ΔT_{c}, welche zwischen etwa 20 bis 60 °C beträgt. Nach der Konvektionskühlung wird das Kühlmittel K zu einer erneuten Prallkühlung, welche im zweiten Kühlbereich 37 durchgeführt wird, verwendet. Die Prallkühlung dient der Kühlung des zweiten Wandelements WE2 und führt wiederum zu einer Prallkühltemperaturerhöhung ΔTᵢₘₚ des Kühlmittels K. Im Anschluß daran wird das Kühlmittel K zur Konvektionskühlung weiterverwendet. Infolgedessen erwärmt sich das Kühlmittel K erneut um eine Temperaturdifferenz, welche gleich der Konvektionstemperaturerhöhung ΔT_{c} ist. Danach wird das Kühlmittel K aus der Anordnung WE1, WE2 ausgelassen. Dabei weist das Kühlmittel K eine Auslaßtemperatur Tₒᵤₜ, 2 auf, die zwischen etwa 350 °C bis 850 °C, insbesondere zwischen etwa 500 °C bis 700 °C, beträgt. In herkömmlichen Kühlverfahren wird das Kühlmittel dagegen nach der Prallkühlung und ggf. Konvektionskühlung eines ersten Wandelements WE1 bereits ausgelassen. Die damit verbundene Auslaßtemperatur T_{out, 1} ist deutlich geringer als die Auslaßtemperatur T_{out, 2} gemäß dem Verfahren. In dem Verfahren wird die Wärmekapazität des Kühlmittels K daher effizienter ausgenutzt. Das Kühlmittel K wird auf eine höhere Temperatur gebracht, indem es für weitere Kühlzwecke eingesetzt wird. Die Wärmeabfuhr aus der Anordnung WE1, WE2 bezogen auf die eingesetzte Menge an Kühlmittel K ist bei dem Verfahren demzufolge merklich erhöht. Mit dieser Steigerung der Kühleffizienz ist eine Erhöhung des Wirkungsgrads der Strömungsmaschine verbunden.

## Patentansprüche

1. Strömungsmaschine (1) mit einer kühlbaren Anordnung mit einem ersten Wandelement (51) und mit einem entlang einer Längsachse (25) an das erste Wandelement (51) angrenzenden zweiten Wandelement (53),
wobei jedes Wandelement (51, 53)
a) eine Wand (27) mit einem entlang der Längsachse (25) an die Wand (27) angrenzenden ersten Randbereich (29) und mit einem entlang der Längsachse (27) dem ersten Randbereich (29) gegenüberliegenden zweiten Randbereich (31), und
b) eine einem heißen Aktionsfluid (A) aussetzbare Heißseite (33) aufweist,
und wobei dem ersten Wandelement (51) ein von der Heißseite (33) abgewandter erster Kühlbereich (35), welcher mit einem Kühlmittel (K) beaufschlagbar ist, und dem zweiten Wandelement (53) ein von der Heißseite (33) abgewandter zweiter Kühlbereich (37) zugeordnet ist,
**dadurch gekennzeichnet, daß** der erste Kühlbereich (35) und der zweite Kühlbereich (37) miteinander in Strömungsverbindung stehen, wobei der zweite Randbereich (31) des ersten Wandelements (51) und der axial daran angrenzende erste Randbereich (29) des zweiten Wandelements (53) sich überlappen, so daß das Kühlmittel (K) unter Vermeidung von Leckverlusten von dem ersten Kühlbereich (35) in den zweiten Kühlbereich (37) gelangt.

2. Strömungsmaschine (1) nach Anspruch 1,
**dadurch gekennzeichnet, daß** die Strömungsverbindung durch einen Übergangsbereich (39) hergestellt ist, der den zweiten Randbereich (31) des ersten Wandelements (51) und den axial daran angrenzenden ersten Randbereich (29) des zweiten Wandelements (53) umfaßt.

3. Strömungsmaschine (1) nach Anspruch 2,
**dadurch gekennzeichnet, daß** der Übergangsbereich (39) eine Passung (41), insbesondere eine Dichtung, aufweist, welche verhindert, daß das heiße Aktionsfluid (A) in den ersten und den zweiten Kühlbereich (35, 37) und/oder Kühlmittel (K) zur Heißseite (33) gelangt.

4. Strömungsmaschine (1) nach einem der Ansprüche 1 bis 3, **dadurch gekennzeichnet, daß** der erste Kühlbereich (35) einen Prallkühlbereich (43A) umfaßt.

5. Strömungsmaschine (1) nach einem der vorhergehenden Ansprüche,
**dadurch gekennzeichnet, daß** der zweite Kühlbereich (37) einen Prallkühlbereich (43B) und einen dem Prallkühlbereich (43B) vorgeschalteten Umlenkbereich (45) für Kühlmittel (K) umfaßt.

6. Strömungsmaschine (1) nach Anspruch 5,
**dadurch gekennzeichnet, daß** der zweite Kühlbereich (35) einen Konvektionskühlbereich (47) umfaßt, der dem Prallkühlbereich (43B) axial nachgeordnet ist.

7. Strömungsmaschine (1) nach Anspruch 6,
**dadurch gekennzeichnet, daß** der Konvektionskühlbereich (47) einen Kühlmittelauslaß (49) aufweist, der sich durch den zweiten Randbereich (31) des zweiten Wandelements (53) in die Heißseite (33) erstreckt.

8. Strömungsmaschine (1) nach einem der vorhergehenden Ansprüche,
**dadurch gekennzeichnet, daß** der zweite Kühlbereich (37) einen Konvektionskühlbereich (47) umfaßt.

9. Strömungsmaschine (1) nach einem der vorhergehenden Ansprüche,
**dadurch gekennzeichnet, daß** das erste Wandelement (51) und/oder das zweite Wandelement (53) eine Plattform (17) einer Turbinenleitschaufel (11) oder ein Führungsring (15) ist.

10. Verfahren zur Kühlung einer Anordnung mit einem ersten Wandelement (51) und mit einem entlang einer Längsachse (25) an das erste Wandelement (51) angrenzenden zweiten Wandelement (53) in einer Strömungsmaschine (1), wobei jedes Wandelement (51, 53) eine einem heißen Aktionsfluid (A) aussetzbare Heißseite (33) aufweist, und wobei dem ersten Wandelement (51) ein von der Heißseite (33) abgewandter erster Kühlbereich (35) und dem zweiten Wandelement (53) ein von der Heißseite (33) abgewandter zweiter Kühlbereich (37) zugeordnet ist, und bei dem
a) ein Kühlmittel (K) dem ersten Kühlbereich (35) zugeführt wird,
b) das erste Wandelement (51) mit dem Kühlmittel (K) im ersten Kühlbereich (35) prallgekühlt wird,
**dadurch gekennzeichnet, daß** das Kühlmittel (K) unter Vermeidung von Leckverlusten nach der Prallkühlung im ersten Kühlbereich (35) zur Kühlung des zweiten Wandelements (53) im zweiten Kühlbereich (37) verwendet wird.

11. Verfahren nach Anspruch 10,
**dadurch gekennzeichnet, daß** das Kühlmittel (K) nach der Prallkühlung im ersten Kühlbereich (35) zur Prallkühlung im zweiten Kühlbereich (37) strömungsgeführt wird.

12. Verfahren nach Anspruch 11,
**dadurch gekennzeichnet, daß** im zweiten Kühlbereich (37) das Kühlmittel (K) nach der Prallkühlung zur konvektiven Kühlung weiterverwendet wird.

13. Verfahren nach einem der Ansprüche 10 bis 12,
**dadurch gekennzeichnet, daß** das Kühlmittel (K) zur Heißseite (33) des zweiten Wandelements (53) ausgelassen wird.

14. Verfahren nach einem der Ansprüche 10 bis 13,
**dadurch gekennzeichnet, daß** das Kühlmittel (K) in der Anordnung von einer Zuführungstemperatur (Tᵢₙ) auf eine Auslaßtemperatur (Tₒᵤₜ) erwärmt wird, wobei die Zuführungstemperatur (Tᵢₙ) zwischen etwa 150°C bis 500°C, insbesondere zwischen etwa 250°C bis 450°C, beträgt.

15. Verfahren nach Anspruch 14,
**dadurch gekennzeichnet, daß** die Auslaßtemperatur (Tₒᵤₜ) zwischen etwa 350°C bis 850°C, insbesondere zwischen etwa 500°C bis 700°C beträgt.

## Claims

1. Turbomachine (1) with a coolable arrangement, having a first wall element (51) and having a second wall element (53), which bounds the first wall element (51) along a longitudinal axis (25), each wall element (51, 53) having
a) a wall (27) having a first boundary region (29) bounding the wall (27) along the longitudinal axis (25) and having a second boundary region (31), which is opposite to the first boundary region (29) along the longitudinal axis (27), and
b) a hot surface (33), which can be exposed to a hot working fluid (A),
and in which arrangement a first cooling region (35), which faces away from the hot surface (33) and which can be subjected to a coolant (K), is associated with the first wall element (51), and a second cooling region (37), which faces away from the hot surface (33), is associated with the second wall element (53), **characterized in that** the first cooling region (35) and the second cooling region (37) have a flow connection with one another, in which arrangement the second boundary region (31) of the first wall element (51) and the first boundary region (29) of the second wall element (53), which region axially bounds the first wall element (51), overlap, in such a way that the coolant (K) passes from the first cooling region (35) into the second cooling region (37), while avoiding leakage losses.

2. Turbomachine (1) according to Claim 1, **characterized in that** the flow connection is produced by a transition region (39), which comprises the second boundary region (31) of the first wall element (51) and the first boundary region (29), which axially bounds the first wall element (51), of the second wall element (53).

3. Turbomachine (1) according to Claim 2, **characterized in that** the transition region (39) has a fit (41), in particular a seal, which prevents the hot working fluid (A) from passing into the first and the second cooling regions (35, 37) and/or coolant (K) from passing to the hot surface (33).

4. Turbomachine (1) according to one of Claims 1 to 3, **characterized in that** the first cooling region (35) comprises an impingement cooling region (43A).

5. Turbomachine (1) according to one of the preceding claims, **characterized in that** the second cooling region (37) comprises an impingement cooling region (43B) and a deflection region (45), for coolant (K), connected upstream of the impingement cooling region (43B).

6. Turbomachine (1) according to Claim 5, **characterized in that** the second cooling region (35) comprises a convection cooling region (47), which is arranged axially downstream of the impingement cooling region (43B).

7. Turbomachine (1) according to Claim 6, **characterized in that** the convection cooling region (47) has a coolant outlet (49), which extends through the second boundary region (31) of the second wall element (53) into the hot surface (33).

8. Turbomachine (1) according to one of the preceding claims, **characterized in that** the second cooling region (37) comprises a convection cooling region (47).

9. Turbomachine (1) according to one of the preceding claims,
**characterized in that** the first wall element (51) and/or the second wall element (53) is a platform (17) of a turbine guide vane (11) or is a guide ring (15).

10. Method of cooling an arrangement having a first wall element (51) and having a second wall element (53), which bounds the first wall element (51) along a longitudinal axis (25), in a turbomachine (1), in which arrangement each wall element (51, 53) has a hot surface (33) which can be exposed to a hot working fluid (A), and a first cooling region (35), which faces away from the hot surface (33), is associated with the first wall element (51) and a second cooling region (37), which faces away from the hot surface (33), is associated with the second wall element (53), and in which
a) a coolant (K) is supplied to the first cooling region (35),
b) the first wall element (51) is impingement-cooled by the coolant (K) in the first cooling region (35),
**characterized in that** after the impingement cooling in the first cooling region (35), the coolant (K) is used for cooling the second wall element (53) in the second cooling region (37), while avoiding leakage losses.

11. Method according to Claim 10, **characterized in that** after the impingement cooling in the first cooling region (35), the flow of the coolant (K) is guided for impingement cooling in the second cooling region (37).

12. Method according to Claim 11, **characterized in that**, in the second cooling region (37), the coolant (K) is further used for convective cooling after the impingement cooling.

13. Method according to one of Claims 10 to 12, **characterized in that** the coolant (K) is released to the hot surface (33) of the second wall element (53).

14. Method according to one of Claims 10 to 13, **characterized in that** the coolant (K) is heated in the arrangement from a supply temperature (Tᵢₙ) to an outlet temperature (Tₒᵤₜ), in which arrangement the supply temperature (Tᵢₙ) is between approximately 150 °C and 500 °C, in particular between approximately 250 °C and 450 °C.

15. Method according to Claim 14, **characterized in that** the outlet temperature (Tₒᵤₜ) is between approximately 350 °C and 850 °C, in particular between approximately 500 °C and 700 °C.

## Revendications

1. Turbomachine (1) ayant un système qui peut être refroidi comprenant un premier élément (51) de paroi et un deuxième élément (53) de paroi adjacent le long d'un axe (25) longitudinal au premier élément (51) de paroi,
chaque élément (51, 53) de paroi ayant
a) une paroi (27) ayant une première partie (29) de bord adjacente le long de l'axe (25) longitudinal à la paroi (27) et une deuxième partie (31) de bord opposée le long de l'axe (27) longitudinal à la première partie (29) de bord et
b) une face (33) chaude qui peut être exposée à un fluide (A) chaud d'action,
et dans laquelle il est associé au premier élément (51) de paroi une première partie (35) de refroidissement éloignée de la face (33) chaude et pouvant être alimentée par un fluide (K) de refroidissement et au deuxième élément (53) de paroi, une deuxième partie (37) de refroidissement éloignée de la face (33) chaude,
**caractérisée en ce que** la première partie (35) de refroidissement et la deuxième partie (37) de refroidissement sont en liaison de communication de fluide l'une avec l'autre, la deuxième partie (31) de bord du premier élément (51) de paroi et la première partie (29) de bord qui y est axialement adjacente du deuxième élément (53) de paroi se chevauchant, de sorte que le fluide (K) de refroidissement passe, en évitant qu'il y ait des pertes par fuites, de la première partie (35) de refroidissement à la deuxième partie (37) de refroidissement.

2. Turbomachine (1) suivant la revendication 1,
**caractérisée en ce que** la communication de fluide est ménagée par une partie (39) de transition qui entoure la deuxième partie (31) de bord du premier élément (51) de paroi et la première partie (29) de bord qui lui est adjacente axialement du deuxième élément (53) de paroi.

3. Turbomachine (1) suivant la revendication 2,
**caractérisée en ce que** la partie (39) de transition a une adaptation (41), notamment une étanchéité, qui empêche que le fluide (A) chaud d'action dans les première et deuxième parties (35, 37) de refroidissement et/ou du fluide (K) de refroidissement arrive à la face (33) chaude.

4. Turbomachine (1) suivant l'une des revendications 1 à 3,
**caractérisée en ce que** la première partie (35) de refroidissement comprend une partie (43A) de refroidissement par rebondissement.

5. Turbomachine (1) suivant l'une des revendications précédentes,
**caractérisée en ce que** la deuxième partie (37) de refroidissement comprend une partie (43B) de refroidissement par rebondissement et une partie (45) de renvoi du fluide (K) de refroidissement en amont de la partie (43B) de refroidissement par rebondissement.

6. Turbomachine (1) suivant la revendication 5,
**caractérisée en ce que** la deuxième partie (35) de refroidissement comprend une partie (47) de refroidissement par convexion qui est montée axialement en aval de la partie (43B) de refroidissement par rebondissement.

7. Turbomachine (1) suivant la revendication 6,
**caractérisée en ce que** la partie (47) de refroidissement par convexion a une sortie (49) pour du fluide de refroidissement qui s'étend en passant par la deuxième partie (31) de bord du deuxième élément (53) de paroi dans la face (33) chaude.

8. Turbomachine (1) suivant l'une des revendications précédentes,
**caractérisée en ce que** la deuxième partie (37) de refroidissement comprend une partie (47) de refroidissement par convexion.

9. Turbomachine (1) suivant l'une des revendications précédentes,
**caractérisée en ce que** le premier élément (51) de paroi et/ou le deuxième élément (53) de paroi est une plate-forme (17) d'une aube (11) directrice de turbine ou un anneau (15) de guidage.

10. Procédé de refroidissement d'un système comprenant un premier élément (51) de paroi et un deuxième élément (53) de paroi adjacent le long d'un axe (25) longitudinal au premier élément (51) de paroi dans une turbomachine (1), chaque élément (51, 53) de paroi ayant une face (33) chaude qui peut être exposée à un fluide (A) chaud d'action et il est associé au premier élément (51) de paroi une première partie (35) de refroidissement éloignée de la face (33) chaude et au deuxième élément (53) de paroi, une deuxième partie (37) de refroidissement éloignée de la face (33) chaude et dans lequel
a) on apporte un fluide (K) de refroidissement à la première partie (35) de refroidissement,
b) on refroidit par rebondissement le premier élément (51) de paroi par le fluide (K) de refroidissement dans la première partie (35) de refroidissement,
**caractérisé en ce que** l'on utilise le fluide (K) de refroidissement en évitant des pertes par fuites après le refroidissement par rebondissement dans la première partie (35) de refroidissement pour refroidir le deuxième élément (53) de paroi dans la deuxième partie (37) de refroidissement.

11. Procédé suivant la revendication 10,
**caractérisé en ce que** l'on fait passer le fluide (K) de refroidissement après le refroidissement par rebondissement dans la première partie (35) de refroidissement pour le refroidissement par rebondissement dans la deuxième partie (37) de refroidissement.

12. Procédé suivant la revendication 11,
**caractérisé en ce que** l'on réutilise dans la deuxième partie (37) de refroidissement le fluide (K) de refroidissement après le refroidissement par rebondissement pour le refroidissement par convexion.

13. Procédé suivant l'une des revendications 10 à 12,
**caractérisé en ce que** l'on fait sortir le fluide (K) de refroidissement vers la face (33) chaude du deuxième élément (53) de paroi.

14. Procédé suivant l'une des revendications 10 à 13,
**caractérisé en ce que** l'on porte le fluide (K) de refroidissement dans le système d'une (Tᵢₙ) d'entrée à une température (Tₒᵤₜ) de sortie, la température (Tᵢₙ) d'entrée étant comprise entre 150°C et 500°C environ, notamment entre 250°C et 450°C environ.

15. Procédé suivant la revendication 14,
**caractérisé en ce que** la température (Tₒᵤₜ) de sortie est comprise entre 350°C et 850°C environ, notamment entre 500°C et 700°C environ.
